# EUROPÄISCHE PATENTSCHRIFT

(11) **EP 1 750 204 B1**
(45) Veröffentlichungstag und Bekanntmachung des Hinweises auf die Patenterteilung: **15.06.2011**
(21) Anmeldenummer: 06116833.2
(22) Anmeldetag: 07.07.2006
(51) Int. Cl.: G06F 13/42

(54) **Verfahren zum Betreiben mehrerer an einen seriellen Bus angeschlossener Teilnehmer**
Method for operating multiple serial bus participants
Procédé d'opération plusieurs utilisateurs de bus seriel

(30) Priorität: 25.07.2005 DE 102005034598
(43) Veröffentlichungstag der Anmeldung: 07.02.2007
(73) Patentinhaber: ROBERT BOSCH GMBH, 70442 Stuttgart (DE)
(72) Erfinder: Kottschlag, Gerhard, 31139, Hildesheim (DE)

(56) Entgegenhaltungen:
- EP-A2- 0 893 767
- WO-A-92/04675
- WO-A-96/13769
- US-A- 6 065 068

## Beschreibung

Die vorliegende Erfindung betrifft ein Verfahren zum Betreiben mehrerer an einen seriellen Bus angeschlossener Teilnehmer. Der Bus umfasst mindestens eine Adressleitung zum Adressieren der Teilnehmer.

Außerdem betrifft die Erfindung einen von mehreren an einen seriellen Bus angeschlossener Teilnehmer. Zumindest einige der Teilnehmer sind über dieselbe Adresse adressierbar. Der Bus umfasst mindestens eine Adressleitung zum Adressieren der Teilnehmer.

### Stand der Technik

Aus dem Stand der Technik sind verschiedene digitale Datenbusse bekannt, welche mehrere Kommunikationsteilnehmer für einen organisierten Informationsaustausch miteinander verbinden. Oftmals wird eine Punkt-zu-Punkt-Kommunikation zwischen zwei Teilnehmern aufgebaut, indem ein Teilnehmer als Master den Ablauf der Kommunikation durch ein geeignetes Kommunikationsprotokoll steuert und ein weiterer Teilnehmer als Slave sich diesem vorgegebenen Protokoll anpasst. Sofern keine gesonderten Auswahlsignale (zum Beispiel Chip-Select-Leitungen) im Bussystem vorhanden sind, wählt der Master einen Kommunikationsteilnehmer durch Aufruf der Bus-Adresse des gewünschten Teilnehmers beziehungsweise des entsprechenden Bausteins. Die Adresse wird über den Bus, genauer gesagt über die Adressleitung des Busses, übermittelt, wodurch nur der adressierte Teilnehmer zur Kommunikation berechtigt ist.

Bei manchen bekannten Implementierungen wie beispielsweise dem I²C-Bus, sind die Teilnehmeradressen in den elektronischen Bausteinen schon bei der Herstellung der Bausteine vorprogrammiert. Bei manchen Bausteinen kann durch eine externe Beschaltung auf einige wenige Alternativadressen umgeschaltet werden. Bei digitalen Bausteinen erfolgt dies oftmals durch digitale Signale an Anschlusspins des Bausteins. Mit zunehmender Miniaturisierung der Bausteine gestaltet sich die Anordnung von vielen Anschlusspins auf dem Baustein zunehmend schwierig, so dass die Anzahl der Alternativadressen sehr beschränkt ist. Viele Bausteine sind deshalb nur zwischen zwei Adressen umschaltbar oder bieten sogar überhaupt keine Auswahlmöglichkeit, sondern nur eine einzige fest einprogrammierte Adresse.

Diese Beschränkung auf eine oder wenige Adressen bei den bekannten Bausteinen wird insbesondere dann zum Problem, wenn zwei oder mehr gleichartige Bausteine an dem gleichen Bus angeschlossen und betrieben werden und all diese Bausteine auf dieselbe Adresse reagieren. Beim Aufruf eines dieser Bausteine durch den Master durch Aufruf der entsprechenden Adresse würden sich gleich mehrere Bausteine angesprochen fühlen und ein Datenchaos wäre die Folge. Deshalb muss der Hersteller der Bausteine (IC-Hersteller) durch die Bereitstellung von Adress-Alternativen schon beim Chip-Design festlegen, wie viele gleichartige Bausteine später in einem Bussystem an dem gleichen Bus betrieben werden sollen. So ist es beispielsweise denkbar, im Bereich der Consumer-Elektronik zwei gleichartige Audio-Bausteine für eine Stereo-Ausgabe von Audio-Signalen, vier gleichartige Audio-Bausteine für eine Quad-Ausgabe von Audio-Signalen und sechs gleichartige Audio-Bausteine für eine Surround-Ausgabe von Audio-Signalen an einen I²C-Bus anzuschließen. Diese gleichartigen Audio-Bausteine müssen derart ausgestaltet sein, dass sie je nach gewünschtem Einsatz mindestens zwei, vier oder sechs unterschiedliche Bus-Adressen zur Verfügung stellen können.

Wenn an einen Bus mehr gleichartige Bus-Teilnehmer mit der gleichen Bus-Adresse angeschlossen werden als die Bus-Teilnehmer unterschiedliche Adressen zur Verfügung stellen können, wird nach dem derzeitigen Stand der Technik ein separater Multiplexer-Baustein zur Aufteilung des Busses in mehrere Teilstränge eingesetzt. Die Bausteine mit gleicher Bus-Adresse werden auf die verschiedenen Teilstränge verteilt. Durch die Implementierung gezielter Umschaltkommandos an den Multiplexer wird sichergestellt, dass immer nur ein Baustein angesprochen wird. Des Weiteren ist es auch bekannt, einen oder mehrere weitere unabhängige Busse aufzubauen, auf die dann die Bausteine, die über dieselbe Bus-Adresse ansprechbar sind, aufgeteilt werden. Beide bekannten Vorschläge, das Aufteilen des Busses in mehrere Teilstränge und der Aufbau weiterer unabhängiger Busse, ist mit erheblichen zusätzlichen Kosten verbunden, was insbesondere in der Consumer-Elektronik und im Automobilbereich problematisch ist, da in diesen Bereichen der Erfolg eines Produkts oder eines Systems insbesondere über den Preis entschieden wird.

WO 92/04675 und US 6 065 068 offenbaren Bussysteme, bei denen Busteilnehmen Adressen während eine Initialisierungsphase zugeordnet werden.

Ausgehend von diesem Stand der Technik liegt der vorliegenden Erfindung die Aufgabe zugrunde, eine Möglichkeit zu schaffen, mehrere an einem gemeinsamen seriellen Bus angeschlossene Teilnehmer, die über dieselbe Adresse adressierbar sind, ohne großen Aufwand und unter Vermeidung höherer Kosten in dem Bussystem zu betreiben.

Zur Lösung dieser Aufgabe wird ausgehend von dem Verfahren der eingangs genannten Art vorgeschlagen, dass zumindest diejenigen Teilnehmer, die ursprünglich über dieselbe Adresse adressiert werden, hintereinander geschaltet an die Adressleitung angeschlossen werden und die Adresse für den oder die nachgeschalteten Teilnehmer über den oder die vorgeschalteten Teilnehmer übermittelt wird.

### Vorteile der Erfindung

Erfindungsgemäß wird also eine modifizierte Bus-Struktur zusammen mit einer von mehreren Möglichkeiten für die Implementierung der Bus-Schnittstelle der angeschlossenen Bausteine vorgeschlagen. Die vorliegende Erfindung ermöglicht insbesondere bei seriellen Bussen den kollisionsfreien Betrieb mehrerer Teilnehmer, die - zumindest noch bei der Initialisierung des Bussystems - dieselben Adressen benutzen. Hierzu wird die Signalleitung des Busses, welche die Adressen überträgt, in mehrere Teilstränge aufgeteilt, welche jeweils zwei der Bausteine mit derselben Adresse miteinander verbinden, so dass sich insgesamt eine Aneinanderreihung sämtlicher Bausteine mit derselben Adresse ergibt. Lediglich einer der Teilnehmer ist direkt an die Adressleitung angeschlossen. Alle übrigen Teilnehmer mit derselben Adresse sind über die ihnen vorgeschalteten Teilnehmer nur indirekt an die Adressleitung angeschlossen. Die Teilnehmer selbst können als Knoten zwischen den Teilsträngen fungieren.

Der erfindungsgemäß verwendete Begriff der Adressleitung ist nicht auf eine Leitung beschränkt, die ausschließlich zur Adressierung dient. Der Begriff der Adressleitung betrifft Leitungen, über die zum einen Signale zum Adressieren der Teilnehmer und zum anderen auch andere Signale übertragen werden können. Er umfasst also auch Leitungen mit gemischten Funktionen.

Häufig werden in Bus-Systemen Adressen und Daten über die gleichen Leitungen übertragen, beispielsweise im Zeit-Multiplex-Betrieb. Dies ist auch bei einer bevorzugten Ausführungsform der Bus-Struktur, dem I²C-Bus, der Fall. Andere Signale, wie beispielsweise ein Takt-Signal, können weiterhin direkt an alle Teilnehmer geführt werden.

Gemäß der vorliegenden Erfindung werden also die Teilnehmer, die ursprünglich über dieselben Adressen ansprechbar sind, nicht mehr alle parallel an den Hauptbus angeschlossen, sondern gewissermaßen kaskadiert: Nur ein erster Teilnehmer ist direkt mit dem ursprünglichen Bus verbunden. Er bildet einen Übergangsknoten zum nachfolgenden Bus-Segment, indem er einen Teil oder alle Befehle, die er über den Bus erhält, an einen weiteren Anschluss weiterleitet, über den er mit einem weiteren baugleichen Teilnehmer verbunden ist. Dabei können diese Kommandos je nach Ausgestaltung der Erfindung im ersten Baustein gezielten Veränderungen, zum Beispiel einer Adressumsetzung, unterworfen werden. Der nachfolgende zweite Teilnehmer gibt die empfangenen Kommandos gegebenenfalls wiederum modifiziert oder selektiert, an einen dritten Teilnehmer weiter und so fort.

Hit Hilfe der vorliegenden Erfindung ist es möglich, mehrere gleichartige Bausteine, die ursprünglich über dieselben Adressen angesprochen werden, an einem gemeinsamen seriellen Bus zu betreiben. Geeignete Hardware-Module zur Realisierung der vorliegenden Erfindung sind beispielsweise zum Nachrüsten von Steckplätzen der Bausteine denkbar. Vor Inbetriebnahme des Busses müssen die Adressen der verschiedenen Teilnehmer nicht festgelegt werden (zum Beispiel durch Drahtbrücken oder sogenannte Jumper). Vielmehr ist es möglich, die Adressen der verschiedenen Teilnehmer während der Initialisierungsphase oder während des bestimmungsgemäßen Betriebs des Busses zum Zwecke der Informationsübertragung flexibel vorzugeben. An den Teilnehmer-Bausteinen ist nur ein zusätzlicher Pin zum Weiterleiten der empfangenen Adressen und Kommandos an den nachgeordneten Teilnehmer erforderlich.

Die Unteransprüche haben vorteilhafte Ausgestaltungen der Erfindung zum Gegenstand. Gemäß Anspruch 2 wird während des eigentlichen Betriebs des Busses zum Zwecke der Informationsübertragung eine Adressumsetzung der ursprünglich selben Adressen der hintereinander geschalteten Teilnehmer auf unterschiedliche Adressen ausgeführt. Die Adressumsetzung kann entweder in einem Master-Teilnehmer oder aber in den hintereinander geschalteten Teilnehmern selbst erfolgen. In den Ansprüche 3 und 4 ist davon die Rede, dass die Adressumsetzung in allen bis auf den letzten der hintereinander geschalteten Teilnehmern ausgeführt wird. Selbstverständlich sind die Regeln zur Adressumsetzung auch in dem letzten Teilnehmer abgelegt und kann auch in dem letzten Teilnehmer eine Adressumsetzung gemäß der erfindungsgemäßen Regeln erfolgen. Allerdings ist an die letzten Teilnehmer kein nachfolgender Teilnehmer angeschlossen, der auf diese Regeln oder Befehle reagieren wird. In sofern kann in der Praxis darauf verzichtet werden, in den letzten der hintereinander geschalteten Teilnehmern die Adressumsetzung auszuführen. Bei der Ausführungsform gemäß Anspruch 4 verfügt der Master für den Fall, dass eine bei einem der hintereinander geschalteten Teilnehmer eingehende Adresse nicht die Adresse des Teilnehmers ist, Informationen darüber, welchem der nachgeschalteten Teilnehmer die Adresse zugeordnet ist.

Ein Vorteil der bit-synchronen Übertragung der Adressen und Kommandos von einem der hintereinander geschalteten Teilnehmer zu dem nachfolgenden Teilnehmer gemäß Anspruch 5 ist, dass in den Teilnehmern kein zusätzlicher Speicher zum Zwischenspeichern von Adressen oder Befehlen benötigt wird und dass es aufgrund der Adressumsetzung - bis auf die Gatterlaufzeigen - zu keiner Verzögerung der Informationsübertragung über den Bus kommt. Das erfindungsgemäße Verfahren mit den Merkmalen des Anspruchs 6 hat den Vorteil, dass nicht nur das aktuell in einem vorgeschalteten Teilnehmer empfangene und zur Weiterleitung an die nachgeschalteten Teilnehmer anstehende Bit, sondern gezielt ein beliebiges Adressbit einer eingehenden und zwischengespeicherten Adresse manipuliert werden kann, bevor die Adresse an den nachgeschalteten Teilnehmer weitergeleitet wird. Auf diese Weise ist die Anzahl der gleichartigen Teilnehmer, die ursprünglich über dieselben Adressen ansprechbar sind, nicht durch die Bitlänge, das heißt die Anzahl der Bits, der Adresse beschränkt, sondern lediglich durch die Anzahl aller freien Adressen (2ⁿ bei einer Bitlänge n) oder die Leistungsfähigkeit der Adressumsetzung.

Die Ausführungsform mit den Merkmalen des Anspruchs 7 hat den Vorteil, dass nach Durchlaufen der Initialisierungsphase, in deren Verlauf eine Umprogrammierung der ursprünglich selben Adressen der hintereinander geschalteten Teilnehmer auf unterschiedliche Adressen erfolgt, die anschließende Informationsübertragung während des eigentlichen Betriebs des Busses ganz normal ohne zusätzliche Adressumsetzung erfolgen kann. Alternativadressen, die den hintereinander geschalteten Busteilnehmern während der Initialisierungsphase zugeordnet werden, können entweder von einem Master-Teilnehmer vorgegeben oder bereits in den verschiedenen Teilnehmern vorgesehen sein.

### Zeichnungen

Bevorzugte Ausführungsbeispiele der vorliegenden Erfindung werden anliegend anhand der Zeichnungen näher erläutert. Es zeigen:
- Figur 1: eine erste Bus-Struktur zur Realisierung des erfindungsgemäßen Verfahrens;
- Figur 2: eine zweite Bus-Struktur zur Realisierung des erfindungsgemäßen Verfahrens;
- Figur 3: eine dritte Bus-Struktur zur Realisierung des erfindungsgemäßen Verfahrens;
- Figur 4: einen erfindungsgemäßen Verfahrensablauf anhand der Bus-Struktur aus Figur 2; und
- Figur 5: eine herkömmliche, aus dem Stand der Technik bekannte Bus-Struktur.

### Beschreibung der Ausführungsbeispiele

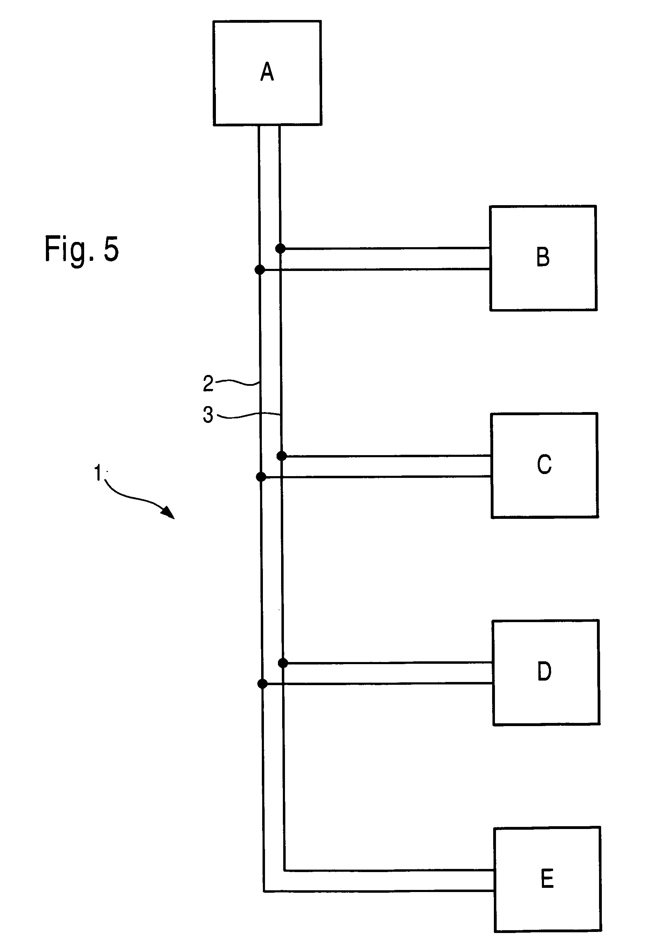

In Figur 5 ist eine aus dem Stand der Technik bekannte Bus-Struktur dargestellt. Diese weist einen Datenbus 1 auf, der eine erste Leitung 2 zur Übermittlung eines Taktsignals und eine zweite Leitung 3 zur Übermittlung eines Datensignals umfasst. Außerdem umfasst die Bus-Struktur einen Master-Teilnehmer A sowie mehrere Slave-Teilnehmer B, C, D, E, die alle direkt an den Datenbus 1 angeschlossen sind und über diesen miteinander zum Zwecke des Daten- und Informationsaustausches miteinander in Verbindung stehen. Die in Figur 5 dargestellte Bus-Struktur entspricht beispielsweise der Struktur eines bekannten I²C-Busses. Über die Leitung 3 zur Übermittlung des Datensignals werden, beispielsweise im Zeit-Multiplex-Betrieb, auch Adresssignale übermittelt. Demnach werden über die Leitung 3 zunächst die Adressen übertragen und anschließend die für die bereits übertragenen Adressen bestimmten Daten.

Bei der bekannten Bus-Struktur treten Probleme auf, wenn mehrere gleichartige Teilnehmer B, C, D, E, die alle über dieselben Adressen ansprechbar sind, an den Bus 1 angeschlossen sind und in dem Bus-System betrieben werden sollen. In einem solchen Fall werden sich bei der bekannten Bus-Struktur bei einem Aufruf einer mehreren Teilnehmern B, C, D, E zugeordneten Adresse durch den Master-Teilnehmer A gleich mehrere Teilnehmer B, C, D, E angesprochen fühlen, und es könnte in der Folge zu einem Datenübertragungschaos auf dem Bus 1 kommen, insbesondere bei Lesezugriffen des Masters.

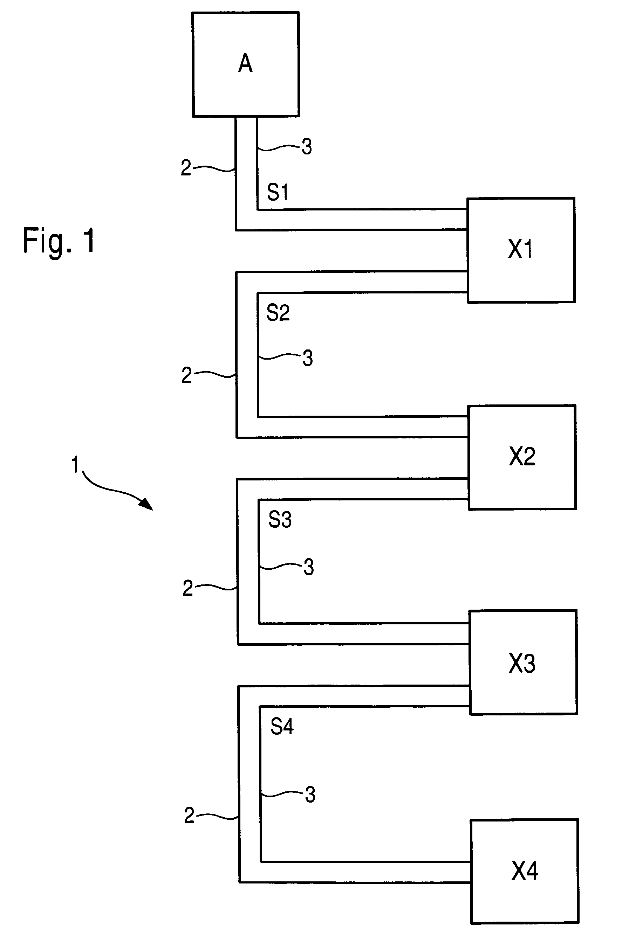

Hier schafft die vorliegende Erfindung Abhilfe. Es wird eine völlig neue Bus-Struktur vorgeschlagen, bei der die Leitung 3 zur Übermittlung der Adresssignale durch diejenigen Teilnehmer X1, X2, X3, X4 hindurchgeschleift ist, die - zumindest zum Zeitpunkt der Initialisierung des Bus-Systems - über dieselben Bus-Adressen ansprechbar sind, so dass der Bus 1 beziehungsweise die Leitung 3 zur Übertragung der Adresssignale in mehrere Segmente unterteilt ist. In dem Ausführungsbeispiel aus Figur 1 ist der Bus 1 in vier Segmente unterteilt, die mit S1, S2, S3 und S4 bezeichnet sind. Bei der erfindungsgemäßen Bus-Struktur ist es dem Master-Teilnehmer A also nicht möglich, einen der Slave-Teilnehmer X2 - X4 unmittelbar anzusprechen. Eine Adressierung der Slave-Teilnehmer X2 - X4 ist nur mittelbar über den ersten Slave-Teilnehmer X1 möglich. Bei dem in Figur 1 dargestellten Ausführungsbeispiel ist zusätzlich zu der Leitung 3 auch die Leitung 2 für das Taktsignal durch sämtliche Slave-Teilnehmer X1 - X4 hindurchgeschleift.

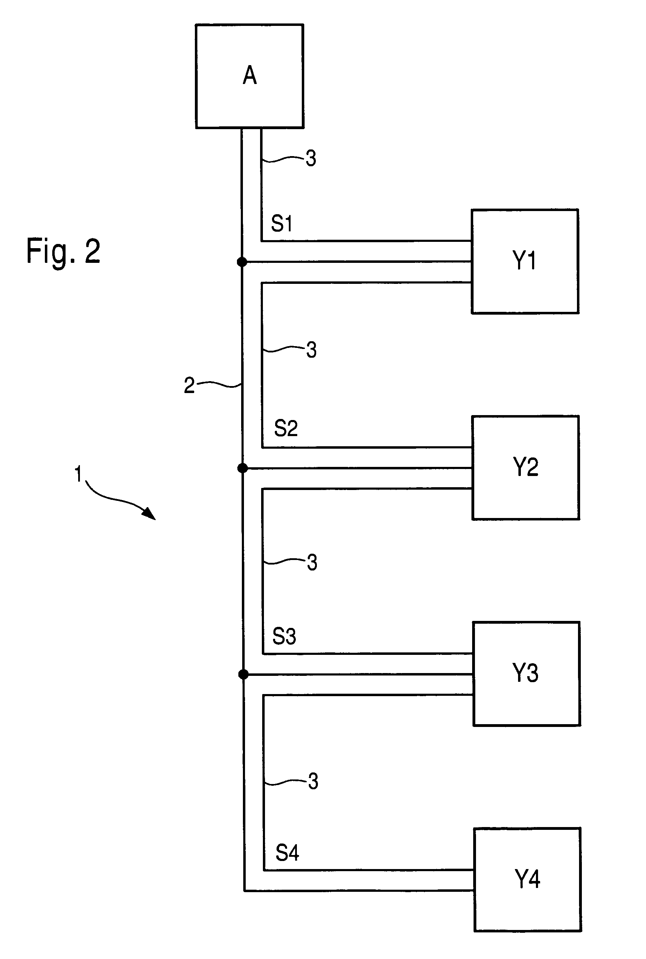

Demgegenüber ist die Leitung 2 für das Taktsignal bei dem in Figur 2 dargestellten Ausführungsbeispiel - wie an sich auch beim Stand der Technik üblich - vergleiche Figur 5 - gesondert zu jedem der Slave-Teilnehmer Y1, Y2, Y3, Y4 geführt. Die Leitung 3 zur Übermittlung der Adress-Signale ist jedoch auch bei dem Ausführungsbeispiel aus Figur 2 durch sämtliche Slave-Teilnehmer Y1 - Y4 hindurchgeschleift und dadurch in insgesamt vier Segmente S1 - S4 unterteilt. Bei den Ausführungsbeispielen aus den Figuren 1 und 2 umfasst die dargestellte Bus-Struktur neben dem Master-Teilnehmer A ausschließlich solche Slave-Teilnehmer X1 - X4 beziehungsweise Y1 - Y4, die ursprünglich über dieselben Adressen adressierbar sind.

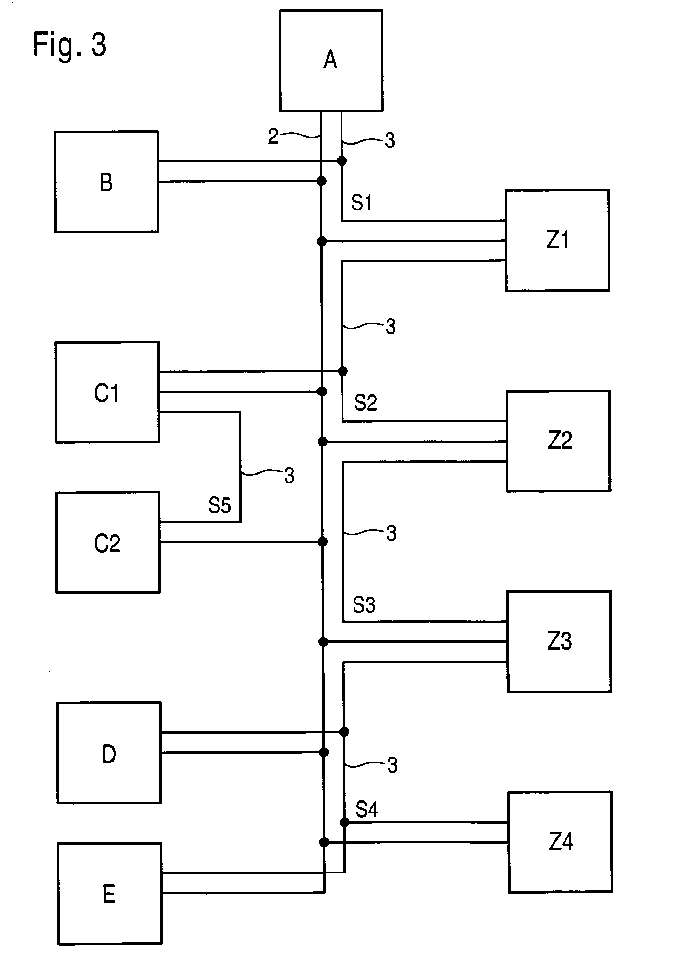

Im Gegensatz dazu umfasst das Ausführungsbeispiel aus Figur 3 neben dem Master-Teilnehmer A und den Slave-Teilnehmern Z1, Z2, Z3, Z4, die alle über dieselbe erste Adresse adressierbar sind, weitere Teilnehmer. Die erweiterte Bus-Struktur aus Figur 3 weist zwei weitere Slave-Teilnehmer C1 und C2 auf, die beide über dieselbe zweite Adresse adressierbar sind, wobei sich die erste Adresse von der zweiten Adresse unterscheidet. Des Weiteren umfasst die in Figur 3 dargestellte Bus-Struktur einen Slave-Teilnehmer B, der unmittelbar von dem Master-Teilnehmer A über eine dritte Adresse adressiert werden kann, wobei sich die dritte Adresse von der ersten und der zweiten Adresse unterscheidet. Schließlich umfasst die in Figur 3 dargestellte Bus-Struktur zwei weitere Slave-Teilnehmer D und E, die lediglich über die Slave-Teilnehmer Z1, Z2 und Z3 beziehungsweise Z1, Z2, Z3 und Z4 über eine vierte Adresse beziehungsweise eine fünfte Adresse adressiert werden können, wobei sich die vierte und die fünfte Adresse sowohl untereinander als auch von der ersten Adresse, der zweiten Adresse und der dritten Adresse unterscheiden. Die Leitung 2 zur Übermittlung des Taktsignals ist zu jedem einzelnen der Slave-Teilnehmer gesondert geführt. Die Leitung 3 zur Übermittlung der Adress-Signale ist neben den vier Segmenten S1 - S4 in ein fünftes Segment S5 zwischen den Teilnehmern C1 und C2 unterteilt.

Die erfindungsgemäß vorgeschlagenen Bus-Strukturen gemäß den Figuren 1 - 3 und die Implementierung des erfindungsgemäßen Verfahrens zum Betreiben mehrerer Teilnehmer, die über dieselben Adressen angesprochen werden, in einer solchen Bus-Struktur, zusammen mit den nachfolgend beschriebenen Varianten für die Bus-Schnittstelle der angeschlossenen Teilnehmer ermöglichen insbesondere bei seriellen Bussen den kollisionsfreien Betrieb mehrerer Teilnehmer, die - zumindest bei der Initialisierung - dieselbe Adresse benutzen. Hierzu wird die Signal-Leitung 3, welche die Adresse überträgt (in der Regel werden Adressen und Daten über die gleiche Leitung 3 übermittelt, wie beispielsweise auch bei dem I²C-Bus), in mehrere Teilstränge S1 - S5 aufgeteilt, wobei die fraglichen Teilnehmer X1 - X4, Y1 - Y4 und Z1 - Z4 auch als Knoten zwischen den Teilsträngen S1 - S5 fungieren. Andere Signale, wie beispielsweise das Taktsignal, können weiterhin direkt an alle Teilnehmer geführt werden (vergleiche Figur 2). Somit werden die gleichartigen Teilnehmer nicht alle parallel an den Hauptbus 1 angeschlossen, sondern kaskadiert: Nur ein erster Teilnehmer X1, Y1, Z1 und C1 ist direkt mit dem ursprünglichen Bus S1 verbunden, er bildet den sogenannten Übergangsknoten zum nachfolgenden Bus-Segment S2 beziehungsweise S5, indem er einen Teil oder alle Befehle und Kommandos, die er von dem Bus S1 erhält, an einen zusätzlichen Anschluss weiterleitet, durch den der Übergangsknoten mit einem weiteren, vorzugsweise baugleichen Teilnehmer X2, Y2, Z2 beziehungsweise C2 verbunden ist. Dabei können die Befehle beziehungsweise Kommandos je nach gewählter Variante in dem Übergangsknoten X1, Y1, Z1 beziehungsweise C1 gezielten Veränderungen, zum Beispiel einer Adressumsetzung, unterworfen werden. Der zweite Teilnehmer X2, Y2, Z2 beziehungsweise C2 gibt die empfangenen Befehle beziehungsweise Kommandos, gegebenenfalls wiederum modifiziert oder selektiert, an einen dritten Teilnehmer X3, Y3 beziehungsweise Z3 weiter und so fort.

Der Vorteil dieser Bus-Struktur und des damit verbundenen Verfahrens zum Betreiben gleichartiger Teilnehmer in dem Bus-System liegt darin, dass mehrere, vorzugsweise baugleiche, Teilnehmer an dem Bus 1 betrieben werden können. Vor Inbetriebnahme des Busses 1 ist eine Festlegung der Adressen der Teilnehmer (beispielsweise durch Drahtbrücken oder Jumper) nicht erforderlich. Lediglich ein zusätzlicher Pin an den Bausteinen der Teilnehmer muss als Anschluss zu dem nachfolgenden Teilnehmer vorgesehen werden.

Figur 5 zeigt eine konventionelle Bus-Struktur, zum Beispiel einen I²C-Bus, bei dem alle Teilnehmer B, C, D, E parallel an allen Signalen des Busses 1 hängen.

Figur 1 zeigt eine Schaltung mit mehreren Bus-Segmenten S1 - S4, alle Signalleitungen 3 sind in diese Segmente aufgeteilt. Die Bus-Teilnehmer X1, X2 und X3 beinhalten einen Übergangsknoten zur selektiven Weiterleitung von Bus-Kommandos. Figur 2 zeigt eine Variante, bei der nur die Signalleitung 3, über die auch die Adressinformationen übertragen werden, und in Segmente S1 - S4 aufgeteilt ist. Auf diese Weise kann die Adresskollision zwischen den Bus-Teilnehmern nach wie vor effektiv unterbunden werden. Das Taktsignal, das über die Leitung 2 übertragen wird, muss hingegen nicht aufgeteilt werden und kann daher direkt an alle Teilnehmer Y1 - Y4 geführt werden. In anderen Bus-Systemen könnten auch andere Signale, die keine AdressInformationen führen, wie beispielsweise gesonderte Datensignale, ebenfalls direkt an alle Teilnehmer gelegt werden.

Figur 3 zeigt eine komplexe Implementierung eines erfindungsgemäßen Bus-Systems, bei dem die baugleichen beziehungsweise adressgleichen Bausteine Z1 - Z4 durch die Bus-Segmentierung im Bus 1 eindeutig identifizierbar und ansprechbar sind. An den dadurch entstehenden Segmenten S1 - S4 sind weitere Teilnehmer anderen Typs, und damit auch anderer Adressen, angeschlossen. Die zwei untereinander baugleichen Teilnehmer C1 und C2 sind ihrerseits durch ein Untersegment S5 so verschaltet, dass auch sie im erfindungsgemäßen Bus 1 gezielt ansprechbar, obwohl sie ursprünglich über die gleiche Adresse adressierbar sind.

Gemäß einer ersten Variante A der Erfindung wird eine permanente Adressmanipulation oder Adressumsetzung in Echtzeit ausgeführt. In den Bausteinen der betroffenen Teilnehmer X1 - X3, Y1 - Y3, Z1 - Z3 beziehungsweise C1 ist eine Schaltung vorgesehen, welche die Datenkommunikation zwar an den zusätzlich vorgesehenen Anschlusspin weiterleitet, aber die Adresssignale zuvor nach bestimmten Regeln manipuliert. In dem Master-Teilnehmer A sind für jeden der an den Bus 1 angeschlossenen Teilnehmer X1 - X4, Y1 - Y4, Z1 - Z4, B, C1, C2, D und E innerhalb einer dargestellten Bus-Struktur unterschiedliche Adressen vorgesehen. Über diese eindeutigen Adressen kann der Master-Teilnehmer A jeden gewünschten Teilnehmer eindeutig adressieren. Allerdings stimmen diese Adressen nicht mit den ursprünglichen Adressen der Teilnehmer X1 - X4, Y1 - Y4, Z1 - Z4 beziehungsweise C1 und C2 überein, da diese Teilnehmer - wie gesagt - ursprünglich über dieselbe Adresse adressieren werden. Über diese ursprüngliche Adresse wird nach der ersten Variante jedoch nur noch der erste Teilnehmer X1, Y1, Z1 beziehungsweise C1, der sogenannte Übergangsknoten, adressiert. Da auch die Adressen der nachgeschalteten Teilnehmer X2 - X4, Y2 - Y4, Z2 - Z4 und C2 über den Übergangsknoten X1, Y1, Z1 beziehungsweise C1 geleitet werden, können solche Adressen von dem Übergangsknoten erkannt und entsprechend manipuliert werden, damit sie der ursprünglichen Adresse von einem der nachgeschalteten Teilnehmer X2 - X4, Y2 - Y4, Z2 - Z4 beziehungsweise C2 entsprechen. Die Adressumsetzung erfolgt während des bestimmungsgemäßen Betriebs des Bus-Systems zum Zwecke der Übertragung von Daten beziehungsweise Informationen nach vorgegebenen Adressumsetzungsregeln.

Eine mögliche Regel zur Manipulation der Adresse könnte folgendermaßen aussehen: Der Übergangsknoten X1, Y1, Z1 beziehungsweise C1 empfängt eine über den Bus S1 beziehungsweise über die Leitung 3 ankommende Adresse Bit für Bit (bitsynchron). Ebenfalls bitsynchron leitet der Übergangsknoten Bit für Bit über den zusätzlichen Anschlusspin an die nachfolgenden Teilnehmer X2 - X4, Y2 - Y4, Z2 - Z4 beziehungsweise C2. Der Übergangsknoten prüft die eingehenden Adressbits, ob sie mit den entsprechenden Bits seiner eigenen Adresse übereinstimmen. Der Übergangsknoten überträgt die Adressbits nur so lange an die nachfolgenden Teilnehmer, bis zum ersten Mal ein eingehendes Adressbit nicht der Codierung seiner eigenen Adresse entspricht, also erstmals erkennbar ist, dass nicht der Übergangsknoten X1, Y1, Z1 beziehungsweise C1, sondern ein anderer, bspw. einer der nachgeschalteten Teilnehmer angesprochen werden soll. Dieses Bit wird dann von den Übergangsknoten entsprechend manipuliert, vorzugsweise invertiert, bevor es an die nachgeschalteten Teilnehmer weitergeleitet wird. Die Manipulation des Adressbitshat zum Ziel, dass sich einer der nachgeschalteten Teilnehmer angesprochen fühlt. Alle nachfolgenden Adressbits werden von dem Übergangsknoten entweder ohne eine weitere Manipulation an den nachfolgenden Strang S2 beziehungsweise S5 des Busses 1 weitergeleitet, oder aber zuvor gemäß den Adressumsetzungsregeln ebenfalls manipuliert.

Falls jedoch alle in dem Übergangsknoten eingehenden Adressbits mit der Adresse des Übergangsknotens übereinstimmen, also der erste Teilnehmer X1, Y1, Z1 beziehungsweise C1 angesprochen ist, und somit die weitergeleiteten Adressbits gar nicht für die nachgeschalteten Teilnehmer bestimmt sind, beendet der erste Teilnehmer X1, Y1, Z1 bzw. C1 die Kommunikation auf dem nachgeschalteten Bussegment in geeigneter Weise. Hierzu sendet der Übergangsknoten als Abschluss z. B. einen bestimmten Befehl, ein sogenanntes Dummy-Kommando, durch das den nachgeschalteten Teilnehmern mitgeteilt wird, dass sie keine Aktion auszuführen haben (sogenannter "NOP"-Befehl). Ein solcher Befehl entspricht beispielsweise bei dem I²C-Bus einer ²C_ Stop-Kondition.

Sofern ein Teilnehmer des Bus-Systems nicht von der gesendeten Adresse angesprochen wird, schickt er alle weiteren Kommunikationssignale, wie beispielsweise Sub-Adressen, Daten, Steuerkommandos und Ähnliches, die über diese Leitung 3 übermittelt werden, unverändert bidirektional an das jeweils nachgeschaltete Bus-Segment S2 - S4 beziehungsweise S5 weiter, bzw. bei Lesebefehlen vom nachgeschalteten Bussegment kommende Daten zum übergeordneten Bussegment S1 bis S3 weiter.

Der Vorteil dieser Variante A liegt darin, dass in den Bausteinen der Teilnehmer keine zusätzlichen Speicherzellen implementiert werden müssen. Die Datenkommunikation auf den nachrangigen Bus-Segmenten S2 - S4 beziehungsweise S5 erfolgt synchron zum Hauptbus S1. Abgesehen von Gatterlaufzeiten entstehen keine zusätzlichen Wartezeiten oder Verzögerungen, durch die die Kommunikationsgeschwindigkeit nennenswert herabgesetzt würde. Diese Variante ist von der Anzahl der adressierbaren Teilnehmer mit ursprünglich derselben Adresse her auf die Anzahl der Adress-Bits beschränkt. Wenn beispielsweise eine Adresse aus 7 Bits besteht, können mit dieser Variante lediglich 7 Teilnehmer adressieren werden, die ursprünglich dieselbe Adresse aufweisen. Dies reicht in den meisten Anwendungsfällen jedoch aus.

Wenn man sich eine vereinfachte Bus-Struktur mit lediglich zwei daran angeschlossenen Teilnehmern mit ursprünglich derselben Adresse vorstellt (vergleiche die Teil-Bus-Struktur aus Figur 3 umfassend den Master-Teilnehmer A und die beiden Slave-Teilnehmer C1 und C2), könnte man sich vorstellen, dass die beiden Teilnehmer C1 und C2 ursprünglich beide über die Adresse "0" adressiert werden. Für den Betrieb des Busses nach der beschriebenen Variante wird dem zweiten Teilnehmer C2 jedoch die Adresse "1" zum Zwecke der Adressierung zugeordnet, tatsächlich hat er aber noch nach wie vor die Adresse "0". Wenn der Master-Teilnehmer A den ersten Teilnehmer C1 adressieren möchte, gibt er die Adresse "0" auf den Bus. Der Teilnehmer "C1", der die Adresse als erste empfängt, erkennt, dass er gemeint ist. Wenn der Master-Teilnehmer A den zweiten Teilnehmer C2 adressieren möchte, gibt er die Adresse "1" auf den Bus 1. Der erste Teilnehmer C1 empfängt die Adresse und erkennt, dass er nicht gemeint ist. Damit der zweite Teilnehmer C2 jedoch erkennt, dass er mit der Adresse "1" gemeint ist, muss das empfangene Adress-Bit "1" in dem Übergangsknoten C1 zunächst in eine "0" umgesetzt werden, bevor es über das Bus-Segment S5 an den zweiten Teilnehmer C2 weitergeleitet wird. Der zweite Teilnehmer C2 empfängt dann die umgesetzte beziehungsweise modifizierte Adresse "0" und erkennt, dass er adressiert ist.

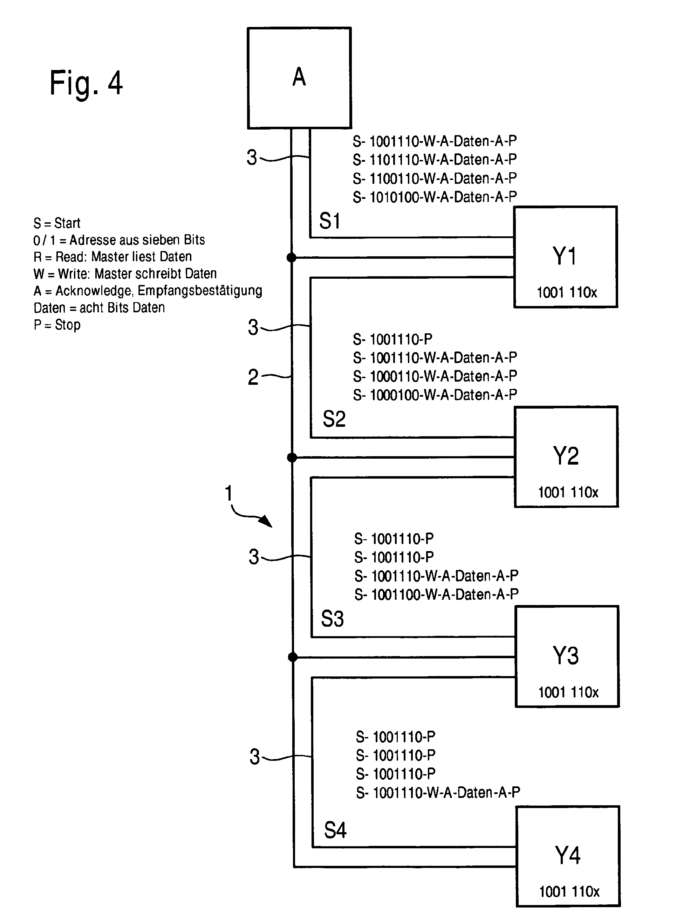

In Figur 4 ist beispielhaft eine Buskommunikation gemäß Variante A aufgeführt. Der Master-Teilnehmer A (zum Beispiel ein Steuerungsprozessor) greift auf den Bus 1 zu und sendet als Master eine Befehlssequenz aus vier Schreibkommandos aus, wobei jeder dieser Befehle einen anderen Teilnehmer Y1 - Y4 am Bus 1 erreichen soll. Die vier Teilnehmer Y1 - Y4 sind baugleich und reagieren alle auf die Adresse 1001110x, wobei "x" die Übertragungsrichtung Lesen oder Schreiben repräsentiert.

Über das erste Segment S1 erreicht die Befehlsequenz den ersten Teilnehmer Y1, der sie zunächst auch synchron, das heißt Bit für Bit, an das zweite Segment S2 weiterleitet. Zudem decodiert er die Adresse dieses ersten Befehls und erkennt dabei, dass er selbst angesprochen ist. Dies führt einerseits dazu, dass die Übertragung des ersten Befehls an das zweite Segment S2 mit einer "STOP"-Bedingung abgebrochen wird und andererseits der Teilnehmer Y1 dieses erste Kommando ausführt.

Beim zweiten Befehl fühlt sich der Teilnehmer Y1 nicht angesprochen, da das zweite Adress-Bit nicht dem entsprechenden Bit seiner Adresse entspricht. Bei der Weiterleitung an das zweite Segment wird genau dieses Bit (und nur dieses Bit) invertiert, der Rest des Kommandos erreicht das Segment S2 im ursprünglichen Zustand. Das Kippen des zweiten Adressbits bewirkt die Umsetzung der Adresse in der Art, dass nun der zweite Teilnehmer Y2 angesprochen wird und diesen zweiten Befehl "aussiebt", ihn also nicht an das dritte Segment S3 weiterleitet, sondern ihn selbst ausführt.

Der dritte Befehl wird sowohl in dem ersten Teilnehmer Y1 um 1 Bit abgeändert (hier: Bit 2), als auch im zweiten Teilnehmer Y2 (hier: Bit 4). Nach diesen Manipulationen erreicht der Befehl über das dritte Segment S3 den dritten Teilnehmer Y3, der seinerseits erkennt, dass er von diesem Befehl angesprochen ist und den Befehl seinerseits ausführt.

Der vierte Befehl wird in dem ersten Teilnehmer Y1 um 1 Bit abgeändert (hier: Bit 2), in dem zweiten Teilnehmer Y2 (hier: Bit 4) und in dem dritten Teilnehmer Y3 (hier: Bit 3). Nach diesen Manipulationen erreicht der Befehl über das vierte Segment S4 den vierten Teilnehmer Y4, der sich von der Adresse angesprochen fühlt und den Befehl ausführt.

Bei einer anderen Variante B wird eine in dem Übergangsknoten empfangene Adresse zunächst zwischengespeichert, gegebenenfalls manipuliert und dann an die nachgeschalteten Teilnehmer weitergeleitet. Die Adressübermittlung in das nachfolgende Bus-Segment erfolgt also nicht bit-synchron, sondern beginnt erst, nachdem die aus dem übergeordneten Segment S1 bis S3 übertragene Adresse im Knoten vollständig empfangen und ausgewertet wurde. Die in dem Übergangsknoten empfangenen Adress-Bits werden zunächst in einem dafür vorgesehenen Zwischenspeicher zwischengespeichert und decodiert. Falls der Übergangsknoten feststellt, dass es sich bei der empfangenen Adresse um seine eigene Adresse handelt, wird das Kommando beziehungsweise der Befehl ausgeführt. Falls der Übergangsknoten jedoch feststellt, dass die empfangene Adresse nicht seine eigene Adresse ist, wird die empfangene Adresse zunächst nach den vorgegebenen Regeln umgesetzt, bevor das Kommando auf das nachfolgende Bus-Segment weitergeleitet wird. Die Regel oder Strategie zur Adressumsetzung umfasst beispielsweise ein Inkrementieren und/oder Dekrementieren bestimmter Adress-Bits. Unter Umständen ist es sinnvoll, dass der Übergangsknoten alle Befehle, die an die eigene Adresse gerichtet sind, von einer Weiterleitung ausschließt, da ohnehin kein weiterer Teilnehmer auf dieses Kommando reagieren darf. Damit während der Adressübermittlung im nachfolgenden Bussegment keine Übertragungen im übergeordneten Segment verloren gehen, sollte der Zwischenspeicher im Busknoten vorteilhafterweise als Schieberegister ausgeführt sein, durch das alle vom Master kommenden Bits geleitet werden. Die Registerlänge entspricht vorzugsweise der Adresslänge.

Der Vorteil dieser Variante B liegt insbesondere in der effizienten Nutzung der vorhandenen Bus-Adressen. Bei einer n-Bit-Adresse können nicht nur wie bei der ersten beschriebenen Variante n Teilnehmer, sondern bis zu 2ⁿ Teilnehmer eindeutig adressiert werden. Die Anzahl gleichartiger Teilnehmer in dem Bus-System ist also nicht durch die Bitlänge der Adresse beschränkt, sondern ergibt sich durch die Anzahl der freien Adressen oder die Leistungsfähigkeit der Adress-Umsetzung. Zwar ergibt sich bei dieser Variante, insbesondere bei einer Kaskadierung mehrerer Teilnehmer (vergleiche beispielsweise die Teilnehmer X1 - X4, Y1 - Y4 und Z1 - Z4) eine Zeitverzögerung und damit eine geringfügige Beeinträchtigung der Kommunikationsgeschwindigkeit beziehungsweise ein geringerer Datendurchsatz des Busses 1. Dies kann aber in den meisten Fällen akzeptiert werden oder aber durch eine Anhebung der Taktrate weitgehend kompensiert werden.

In einem weiteren Beispiel wird von einem Bus 1 nach Variante B mit folgenden Vereinbarungen ausgegangen: Alle Teilnehmer Y1 - Y4 verwenden die Adresse 4. Alle anderen Adressen werden um 2 verringert weitergereicht.

Der Zugriff auf die Teilnehmer Y1 - Y4 erfolgt nach dem nachfolgend beschriebenen Verfahren: Wenn der Master-Teilnehmer A die Adresse 4 anspricht, erreicht er den ersten Teilnehmer Y1 der Kette. Je nach Implementierung des Protokolls könnte in diesem Fall das nächste Bus-Segment inaktiv bleiben. Wenn der Master-Teilnehmer A die Adresse 8 anspricht, so erreicht er den dritten Teilnehmer Y3 der Kette, denn der erste Teilnehmer Y1 macht aus der Adresse 8 eine neue Adresse 6, leitet den Befehl weiter an den zweiten Teilnehmer Y2, der aus der Adresse 6 eine Adresse 4 macht und diese seinerseits weiterleitet. Der dritte Teilnehmer Y3 fühlt sich mit Adresse 4 angesprochen und führt den entsprechenden Befehl aus.

Gemäß noch einer anderen Variante C leitet ein Übergangsknoten alle Kommandos, die nicht an seine eigene Adresse gerichtet sind, unverändert zwischen den beiden angeschlossenen Bus-Segmenten bidirektional weiter. Dies kann mit einer Adressdecodierung in Echtzeit erfolgen, indem der Übergangsknoten zunächst während der Übertragung der Adresse die Übertragung durchführt und nur für den Fall, dass mit dem Ende der Adressübertragung die eigene Bus-Adresse erkannt wird, die Übertragung in das nachfolgende Bussegment dann mit einem "NOP"-Befehl beziehungsweise einem STOP-Kommando abgebrochen wird, so dass dieses Kommando nur in dem Übergangsknoten selbst decodiert und ausgeführt wird. Mit dem regulären Ende des Kommandos (STOP-Kommando) wird die Sperrung des Übergangsknotens aufgehoben und die nachfolgenden Befehle werden wieder an alle Bus-Stränge übertragen, bis zur nächsten Adress-Erkennung und einer dadurch initiierten Segmentabschaltung.

In diesem Initialisierungszustand ist nur der erste Teilnehmer X1, Y1, Z1 beziehungsweise C1 dieser Kette von Bus-Teilnehmern mit gleicher Adresse ansprechbar. Daher wird der erste Teilnehmer von dem Master-Teilnehmer A (beispielsweise einem Steuerungsprozessor) auf eine andere, noch nicht belegte Bus-Adresse umprogrammiert. Ab diesem Zeitpunkt kann über die ursprüngliche Adresse nunmehr auf den zweiten nachgeschalteten Teilnehmer X2, Y2, Z2 beziehungsweise C2 der Kette zugegriffen werden. Gegebenenfalls wird auch dieser auf eine weitere Adresse umprogrammiert, um den dritten Teilnehmer X3, Y3, Z3 zu erreichen und so fort.

In den Bausteinen der Teilnehmer müssen bei dieser Variante C mit Ausnahme der Speicherzellen für eine neue Adresse keine zusätzlichen Speicher implementiert werden. Zudem erfolgt die Datenkommunikation auf den nachrangigen Bus-Segmenten S2 - S4 beziehungsweise S5 synchron zum Hauptbus 1. Abgesehen von Gatterlaufzeiten entstehen keine zusätzlichen Wartezeiten, durch die die Kommunikationsgeschwindigkeit nennenswert herabgesetzt würde. Nach einem einmaligen Umprogrammieren der Teilnehmer-Adressen während einer Initialisierungsphase ist im Dauerbetrieb, das heißt im bestimmungsgemäßen Einsatz des Busses zur Informations- beziehungsweise Datenübertragung, kein erhöhter Aufwand gegenüber herkömmlichen Bussen erforderlich. Außerdem ist eine volle Adressflexibilität, auch gemischt mit Teilnehmern anderer Typen, gegeben (vergleiche Figur 3).

Gemäß einer weiteren Variante D werden die Übergangsknoten durch einen Software-Befehl gezielt angesteuert, um zu öffnen, das heißt um eingehende Befehle an die nachfolgenden Bus-Segmente weiterzuleiten oder umzuschließen. Der Übergangsknoten in dem ersten Teilnehmer X1, Y1, Z1 beziehungsweise C1 wird durch einen gezielten Befehl geöffnet, so dass der weitere Datenstrom dann in das nachfolgende zweite Segment S2 beziehungsweise S5 vordringen kann. Es wird also ein Befehl implementiert, der das Durchschalten einer Verbindung zum nachfolgenden Bus-Segment S2 beziehungsweise S5 bewirkt. Die nachfolgenden Daten des Kommunikationspakets finden in dem Übergangsknoten keine Anwendung, sondern werden weitergeleitet. Sie enthalten wieder zunächst eine Adresse, in der Regel die gleiche Adresse des ersten Teilnehmers X1, Y1, Z1 beziehungsweise C1, denn es soll ein nachgeschalteter Teilnehmer X2 - X4, Y2 - Y4, Z2 - Z4 beziehungsweise C2 des gleichen Typs angesprochen werden. Wenn auch dort bei dem nachgeschalteten Teilnehmer wieder ein Befehl zum Durchschalten in das nächste Bus-Segment S3 enthalten ist, so erreicht die Kommunikation dann den dritten Teilnehmer X3, Y3, Z3 der Kette, und so fort. Mit dem Ende der Kommunikationssequenz, z. B. der STOP-Kondition, werden alle zuvor aufgeschalteten Verbindungen wieder getrennt.

Diese Funktion des softwaregesteuerten Durchschaltens der Busknoten kann auf die Initialisierungsphase des Busses 1 beschränkt werden. Mit Hilfe der Befehle zum Zuschalten von Segmenten S2, S3, S4 beziehungsweise S5 wird das Ende der Kette gleicher Teilnehmer ermittelt, und danach werden die Adressen der Teilnehmer umprogrammiert, so dass keine Kollision mehr vorliegt. Ab dann werden alle Knoten mit einem weiteren Schaltbefehl auf permanente Datenverbindung geschaltet und ein ungehinderter Datenverkehr gemäß der bekannten Busspezifikation kann kollisionsfrei durchgeführt werden. Nun haben alle Knoten eine individuelle Adresse und alle Knoten sind permanent durchgeschaltet. Der Master sieht keinen Unterschied mehr zu einem regulären Busbetrieb, bspw. einem regulären I²C-Busbetrieb, nach dem Stand der Technik.

Die Vorteile dieser Variante D liegen darin, dass nach einer einmaligen Umprogrammierung der Teilnehmer-Adressen im Dauerbetrieb kein erhöhter Aufwand gegenüber herkömmlichen Bussen erforderlich ist. Außerdem ist eine volle Adressflexibilität, auch gemischt mit Teilnehmern anderer Typen (vergleiche Figur 3) gegeben. Wenn eine Implementierung gewählt wird, bei der keine Adressumprogrammierung erfolgt, können die vorhandenen Adressen dauerhaft von mehreren Teilnehmern genutzt werden, wodurch sich die Anzahl maximal möglicher Busteilnehmer entsprechend erhöht. Allerdings werden dabei wie zuvor beschrieben die Befehlssequenzen länger, da sie die Umschaltbefehle enthalten.

Gemäß noch einer weiteren Variante E wird eine automatische Kollisionserkennung und Kollisionsbeseitigung innerhalb des Bus-Systems vorgeschlagen. Dabei wird beim Start des Bus-Betriebs eine Prozedur durchgeführt, bei der kollidierende Busadressen automatisch erkannt und neu vergeben werden. In der Folge sind somit keine Adresskollisionen mehr zu beobachten.

Eine mögliche Abstimmungsprozedur, die ggf. vom Master-Teilnehmer A initiiert beim Start des Bus-Betriebs durchgeführt wird, kann darin bestehen, dass jeder Teilnehmer versucht, an seinem nachrangigen Strang S1 - S5 des Busses 1 einen weiteren Teilnehmer mit der gleichen Adresse anzusprechen, die er selbst auch verwendet. Der erste Teilnehmer bis zum (n-1)-ten Teilnehmer der Kette erhält eine Antwort auf seine Anfrage, da immer mindestens ein weiterer Teilnehmer mit gleicher Adresse am nachrangigen Strang hängt. Nur der letzte Teilnehmer der Kette hat keine Nachfolger, so dass seine Anfrage unbeantwortet bleibt. Dieser letzte Teilnehmer ist per Definition allein berechtigt, die bisher gemeinsam genutzte Bus-Adresse für sich zu reklamieren und nachfolgend auf Kommando auf diese Adresse zu reagieren.

Sofern dieser letzte Teilnehmer eine Anfrage von dem ihm vorangeschalteten Teilnehmer erhalten hat, aber keine Antwort eines potentiellen nachgeschalteten Teilnehmers eingegangen ist, meldet der letzte Teilnehmer der Kette X4, Y4, Z4 beziehungsweise C2 mit einem speziellen Befehl das Auftreten der Adress-Kollision, dadurch beantragt er quasi eine neue Adresse für die anderen vorangeschalteten gleichartigen Teilnehmer der Kette. Der Master-Teilnehmer A generiert eine neue Adresse und schickt den Befehl zur Adressumstellung an die alte, ursprüngliche Adresse. Alle Teilnehmer, die auf ihre erste Anfrage hin eine Antwort erhalten haben, also nicht der letzte Teilnehmer der Kette sind und somit die Adresse nicht behalten dürfen, stellen nun ihre eigene Adresse auf die neue Adresse um. Nur der letzte Teilnehmer in der Kette bleibt bei seiner ursprünglichen Adresse.

Wenn mehr als zwei gleichartige Teilnehmer am Bus 1 in Serie geschaltet sind (zum Beispiel Teilnehmer X1 - X4, Y1 - Y4 und Z1 - Z4), sind nun immer noch mindestens zwei Teilnehmer unter der gleichen Adresse erreichbar. Also beginnt die Adressabsprache von neuem: Diejenigen Teilnehmer, die noch unter der gleichen Adresse erreichbar sind, nämlich die Teilnehmer X1 - X3, Y1 - Y3 und Z1 - Z3, senden eine Anfrage an eventuell nachgeschaltete Teilnehmer, die ebenfalls diese (neu zugeteilte) Adresse nutzen. Der vorletzte Teilnehmer X3, Y3, Z3 der Kette ist nun der letzte Teilnehmer mit dieser neu zugeteilten Adresse und darf somit seine Adresse behalten. Er fordert eine neue Adresse für alle Teilnehmer X1, X2, Y1, Y2, Z1, Z2, die ihm in der Kette vorangeschaltet sind und die ebenfalls unter seiner eigenen Adresse erreichbar sind.

Diese Abstimmungskommunikationen werden solange ausgeführt, bis auch dem ersten Teilnehmer X1, Y1, Z1 schlussendlich eine eigene neue Adresse zugeteilt wurde, so dass dann jeder Teilnehmer über eine individuelle Adresse adressiert werden kann. Während der Abstimmungskommunikation hat der erste Teilnehmer X1, Y1, Z1 insgesamt drei neu zugeteilte Adressen erhalten, wobei er nur die ihm zuletzt zugeteilte neue Adresse behalten darf.

Eine andere Strategie zur Neuverteilung der Geräteadressen kommt ohne die Koordination eines zentralen Steuerungsprozessors in Form des Master-Teilnehmers A aus, da die benötigten Informationen über die Adressweiterschaltung in den betroffenen Teilnehmern X1 - X3, Y1 - Y3, Z1 - Z3 beziehungsweise C2 abgelegt sind: Der Teilnehmer, der sich zuerst als das Ende Kette identifiziert, ist nachfolgend der einzige unter dieser Adresse ansprechbare Teilnehmer. Ggf. schickt er einen entsprechenden Befehl an seine eigene Adresse und proklamiert sich damit zum einzigen Eigentümer dieser Adresse. Damit ist der Vergabeprozess für diese Adresse abgeschlossen. Alle anderen Teilnehmer mit der zunächst gleichen Adresse schalten nun intern, z. B. ausgelöst durch den Befehl des letzten Teilnehmers der Kette, auf eine Zweit-Adresse. Zu diesem Zweck kann in den Teilnehmern intern eine Liste von vorgegebenen Folgeadressen abgespeichert sind. Im einfachsten Fall wird die ursprüngliche Adresse einfach um "1" erhöht. Danach beginnt der Prozess der Abstimmung für diese Zweit-Adresse von neuem, wobei sich nun - wie bereits oben beschrieben - der vorletzte Teilnehmer X3, Y3, Z3 als Ende der Kette und damit als alleinige Eigentümer dieser Zweitadresse proklamiert. Der Prozess wiederholt sich so lange, bis ein Teilnehmer feststellt, dass er keinen Nachfolger, aber auch keinen Vorgänger mit der gleichen Adresse hat. Damit ist sichergestellt, dass alle zunächst gleich adressierten Busteilnehmer nun jeder eine eigene individuelle Adresse hat. Der Teilnehmer, der als letzter seine Adresse umgestellt hat und nunmehr keine Kollision mehr feststellt, proklamiert mit einem speziellen Befehl den Abschluss der Abstimmungskommunikation, so dass nun der eigentliche BusBetrieb zum Zwecke der Daten- und/oder Informationsübertragung aufgenommen werden kann. Selbstverständlich sind im Rahmen der Erfindung noch weitere Alternativen zum Start, zur Synchronisation und zur Beendigung der Adressneuverteilung möglich.

Bei dieser Variante E sollte sichergestellt werden, dass die neu zugeteilten Adressen nicht schon von anderen Teilnehmer-Typen in Bus 1 belegt sind. Das könnte auf die nachfolgend beschriebene Weise sichergestellt werden. Der Teilnehmer, der das Ende der Kette gleichartiger Teilnehmer mit gleicher Adresse bildet und sich zum alleinigen Eigentümer einer Adresse proklamiert, ist auch für die Auswahl einer geeigneten Alternativadresse verantwortlich. Dazu generiert er (zum Beispiel durch einfaches Inkrementieren der ursprünglichen Adresse) eine neue Adresse und schickt in beide angrenzenden Busstränge eine Anfrage, ob diese Adresse bereits von einem anderen Teilnehmer genutzt wird. Wenn das der Fall ist, wird eine neue Adresse erzeugt und wiederum überprüft. Ist die Adresse frei, so sendet dieser Endknoten einen entsprechenden Umprogrammier-Befehl an seine eigene Adresse und veranlasst so, dass alle Teilnehmer, die immer noch auf diese Adresse eingestellt sind, nunmehr diese neue Adresse verwenden und gegebenenfalls unter sich ausmachen, wer nun diese neue Adresse endgültig nutzen darf.

Alle Bus-Teilnehmer, die diese Teilnehmer später ansprechen wollen (insbesondere der Master-Teilnehmer A) beobachten diese Abstimmungs-Kommunikation auf dem Bus 1 und merken sich, welche Adressen als zulässige Alternativadressen detektiert und von welchen Teilnehmern sie in Besitz genommen wurden und nachfolgend angesprochen werden müssen, um die verschiedenen Teilnehmer gleichen Typs zu erreichen.

Der Vorteil dieses Verfahrens besteht darin, dass nach einer einmaligen Kollisionserkennung und Neusortierung der Teilnehmer-Adressen im bestimmungsgemäßen Einsatz des Busses zum Zwecke der Daten- und/oder Informationsübertragung im Dauerbetrieb kein erhöhter Aufwand gegenüber herkömmlichen Bus-Systemen erforderlich ist. Diese Variante kann auch ohne die Koordinaten durch einen Master-Teilnehmer A ablaufen, wobei sich dann die gleichartigen Teilnehmer untereinander einigen.

## Patentansprüche

1. Verfahren zum Betreiben mehrerer an einen seriellen Bus (1) angeschlossener Teilnehmer (X1,...X4; Y1....,Y4; Z1,...Z4, B, C1, C2, D, E), wobei der Bus (1) mindestens eine Adressleitung (3) zum Adressieren der Teilnehmer (X1....X4; Y1,...Y4; Z1,...Z4, B, C1, C2, D, E) umfasst, **dadurch gekennzeichnet, dass** zumindest einije Teilnehmer (X1,...X4; Y1,...,Y4; Z1,...Z4, C1, C2), die ursprünglich über dieselbe ursprüngliche Adresse adressiert werden, hintereinander geschaltet an die Adressleitung (3) angeschlossen werden, so dass lediglich einer der Teilnehmer (X1,...X4; Y1,...,Y4; Z1,...Z4, C1, C2), die ursprünglich über dieselbe Adresse adressiert werden direkt an die Adressleitung (3) abgeschlossen ist, und die Adresse für den oder die nachgeschalteten Teilnehmer (X2,...X4; Y1,...,Y4; Z2,...Z4; C2) über den oder die vorgeschalteten Teilnehmer (X1; Y1, Z1; C1) übermittelt wird und dabei die Adresse von dem oder den vorgeschalteten Teilnehmern (X1; Y1, Z1; C1) nach bestimmten Regeln verandert wird, so dass sie der ursprünglichen Adresse von einem der nachgeschalteten Teilnehmern (X2,...X4; Y1,...,Y4; Z2,...Z4; C2) entspricht.

2. Verfahren nach Anspruch 1, **dadurch gekennzeichnet, dass** während des eigentlichen Betriebs des Busses (1) zum Zwecke der Informationsübertragung eine Adressumsetzung der Adressen der hintereinander geschalteten Teilnehmer (X1,...X4; Y1,...Y4; Z1,...Z4; C1, C2) auf unterschiedliche Adressen erfolgt.

3. Verfahren nach Anspruch 2, **dadurch gekennzeichnet, dass** in allen bis auf den letzten der hintereinander geschalteten Teilnehmer (X1,...X3; Y1,...Y3; Z1,...Z3; C1) jeweils für die nachgeschalteten Teilnehmer (X2,...X4; Y1,...Y4; Z2,...Z4, C2)die Adressumsetzung ausgeführt wird.

4. Verfahren nach Anspruch 3, **dadurch gekennzeichnet, dass** in allen bis auf den letzten der hintereinander geschalteten Teilnehmer (X1,...X3; Y1,...Y3; Z1,...Z3; C1) Regeln für die Adressumsetzung des oder der nachgeschalteten Teilnehmer (X2,...X4; Y1,...Y4; Z2,...Z4, C2) abgelegt sind und dass alle bis auf den letzten der hintereinander geschalteten Teilnehmer (X1,...X3; Y1,...Y3; Z1,...Z3; C1) eine eingehende Adresse dahingehend prüfen, ob es die eigene Adresse ist, und, falls es nicht die eigene Adresse ist, die eingehende Adresse gemäß den entsprechenden Adressumsetzungsregeln umsetzen und an den oder die nachgeschalteten Teilnehmer (X2,...X4; Y1,...Y4; Z2,...Z4; C2) weiterleiten.

5. Verfahren nach Anspruch 4, **dadurch gekennzeichnet, dass** die Teilnehmer (X1,...X3; Y1,...Y3; Z1,...Z3; C1) die eingehende Adresse Bit für Bit prüfen, gegebenenfalls umsetzen und an den oder die nachgeschalteten Teilnehmer (X2,...X4; Y2,...Y4; Z2,...Z4; C2) weiterleiten.

6. Verfahren nach Anspruch 5, **dadurch gekennzeichnet, dass** die Teilnehmer (X1,...X3; Y1,...Y3; Z1,...Z3; C1) das erste eingehende Adressbit, das nicht mit der Bitkombination der Adresse des Teilnehmers (X1,...X3; Y1,...Y3; Z1,...Z3; C1) übereinstimmt, unter Verwendung einer Umsetzungsregel an die nachgeschalteten Teilnehmer (X2,...X4; Y2,...Y4; Z2,...Z4; C2) weiterleiten, als die zuvor übertragenen Adressbits oder als alle anderen Adressbits.

7. Verfahren nach Anspruch 4, **dadurch gekennzeichnet, dass** die eingehende Adresse in den Teilnehmern (X1,...X3; Y1,...Y3; Z1,...Z3; C1) zwischengespeichert und decodiert wird, und gegebenenfalls mindestens ein Adressbit gezielt umgesetzt wird und die umgesetzte Adresse an den oder die nachgeschalteten Teilnehmer (X2,...X4; Y2,...Y4; Z2,...Z4; C2) weitergeleitet wird.

8. Verfahren nach einem der Ansprüche 4 bis 7, **dadurch gekennzeichnet, dass** die Teilnehmer (X1,...X3; Y1,...Y3; Z1,...Z3; C1) die Weiterleitung der Kommunikation an die nachgeschalteten Teilnehmer (X2,...X4; Y2,...Y4; Z2,...Z4; C2) unterbinden, vorzeitig abbrechen oder modifizieren, sofern sie an die eigene Adresse gerichtet sind.

9. Verfahren nach Anspruch 8, **dadurch gekennzeichnet, dass** die Teilnehmer (X1,...X3; Y1,...Y3; Z1,...Z3; C1) durch Umschalt-Befehle zur Weiterleitung einer einzigen Kommunikationssequenz und/oder zur permanenten Weiterleitung aller Kommunikationssequenzen bis zum Eintreffen eines Ereignisses, eines Abschalt-Kommandos oder einer Neuinitialisierung des Teilnehmers (X1,...X3; Y1,...Y3; Z1,...Z3; C1) eingestellt werden.

10. Verfahren nach einem der Ansprüche 1 bis 4, **dadurch gekennzeichnet, dass** während einer Initialisierungsphase vor dem eigentlichen Betrieb des Busses zum Zwecke der Informationsübertragung eine Umprogrammierung der ursprünglich selben Adressen der hintereinander geschalteten Teilnehmer (X1,...X4; Y1,...Y4; Z1,...Z4; C1, C2) auf unterschiedliche Adressen erfolgt.

11. Verfahren nach Anspruch 10, **dadurch gekennzeichnet, dass** ein an den Bus (1) angeschlossener Master-Teilnehmer (A) die Umprogrammierung der Adressen veranlasst und koordiniert.

12. Verfahren nach Anspruch 10, **dadurch gekennzeichnet, dass** ein an den Bus (1) angeschlossener Master-Teilnehmer (A) die Umprogrammierung der Adressen veranlasst und zumindest einige der hintereinander geschalteten Teilnehmer (X1,...X4; Y1,...Y4; Z1,...Z4; C1, C2) die Umprogrammierung der Adressen koordinieren.

13. Verfahren nach Anspruch 10, **dadurch gekennzeichnet, dass** zumindest einige der hintereinander geschalteten Teilnehmer (X1,...X4; Y1,...Y4; Z1,...Z4; C1, C2) die Umprogrammierung der Adressen veranlassen und koordinieren.

14. Verfahren nach Anspruch 12 oder 13, **dadurch gekennzeichnet, dass** zumindest in einigen der hintereinander geschalteten Teilnehmern (X1,...X4; Y1,...Y4; Z1....Z4; C1, C2) Alternativadressen oder Vorschriften zum Bilden der Alternativadressen gespeichert sind, auf die der Teilnehmer (X2,...X4; Y2,...Y4; Z2,...Z4; C2) zum Umprogrammieren der Adresse umgeschaltet wird.

15. Verfahren nach einem der Ansprüche 10 bis 14, **dadurch gekennzeichnet, dass** das Verfahren so lange ausgeführt wird, bis alle Teilnehmer (X1,...X4; Y1,...Y4; Z1,...Z4; C1, C2) während des Betriebs des Busses (1) zum Zwecke der Informationsübertragung über unterschiedliche Adressen ansprechbar sind.

16. Einer von mehreren an einen seriellen Bus (1) angeschlossenen Teilnehmern (X1,...X4; Y1,...Y4; Z1,...Z4; C1, C2), wobei zumindest einige der Teilnehmer (X1,...X4; Y1,...Y4; Z1,...Z4; C1, C2) über dieselbe Adresse adressierbar sind und der Bus (1) mindestens eine Adressleitung (3) zum Adressieren der Teilnehmer (X1,...X4; Y1,...Y4; Z1,...Z4; C1, C2) umfasst, **dadurch gekennzeichnet, dass** der Teilnehmer (X1,...X3; Y1,...Y3; Z1,...Z3; C1) erste Mittel zum Anschluss an die Adressleitung (3) und zweite Mittel zum Anschluss von einem derjenigen Teilnehmer (X2,...X4; Y2,...Y4; Z2,...Z4; C2) aufweist, die ursprünglich über dieselbe Adresse adressierbar sind, wie er selbst, so dass die Teilnehmer (X1,...X4; Y1,...Y4; Z1,...Z4; C1; C2), die ursprünglich über dieselbe Adresse adressierbar sind, hintereinander geschaltet über den Teilnehmer (X1,...X3; Y1,...Y3; Z1,...Z3; C1) an die Adressleitung (3) angeschlossen sind, so dass lediglich einer der Teilnehmer (X1,...X4; Y1,...,Y4; Z1,...Z4, C1, C2), die ursprünglich über dieselbe Adresse adressierbar sind, direkt an die Adressleitung, (3) angeschlossen ist, und nur der direkt angeschlossene Teilnehmer von einem Master-Teilnehmer (A) über die ursprüngliche Adresse adressiert wird und der Teilnehmer (X1,...X3; Y1,...Y3; Z1,...Z3; C1) dritte Mittel zur veränderung der Adresse nach bestimmten Regeln und Übermitteln der veränderten Adresse für den oder die nachgeschalteten Teilnehmer (X2,...X4; Y2,...Y4; Z2,...Z4; C2) aufweist, so dass sie der ursprünglichen Adresse von einem der nachgeschalleten Teilnehmer (X2,...X4: Y1,...,Y4; Z2,...Z4; C2) entspricht.

17. Teilnehmer nach Anspruch 16, **dadurch gekennzeichnet, dass** der Teilnehmer ((X1,...X3; Y1,...Y3; Z1,...Z3; C1) Mittel zur Realisierung eines Verfahrens nach einem der Ansprüche 2 bis 12 aufweist.

## Claims

1. Method for operating a plurality of subscribers (X1, ... X4; Y1, ... Y4; Z1, ... Z4, B, C1, C2, D, E) connected to a serial bus (1), wherein the bus (1) comprises at least one address line (3) for addressing the subscribers (X1, ... X4; Y1, ... Y4; Z1, ... Z4, B, C1, C2, D, E), **characterized in that** at least some subscribers (X1, ... X4; Y1, ... Y4; Z1, ... Z4, C1, C2), which are originally addressed using the same original address, are connected in series to the address line (3), so that only one of the subscribers (X1, ... X4; Y1, ... Y4; Z1, ... Z4, C1, C2) which are originally addressed using the same address is connected directly to the address line (3), and the address for the downstream subscriber(s) (X2, ... X4; Y1, ... Y4; Z2, ... Z4; C2) is transmitted via the upstream subscriber(s) (X1; Y1, Z1; C1) and at the same time the address of the upstream subscriber(s) (X1; Y1, Z1; C1) is altered on the basis of particular rules, so that it corresponds to the original address of one of the downstream subscribers (X2, ... X4; Y1, ... Y4; Z2, ... Z4; C2).

2. Method according to Claim 1, **characterized in that** during the actual operation of the bus (1) for the purpose of information transmission the addresses of the series-connected subscribers (X1, ... X4; Y1, ... Y4; Z1, ... Z4; C1, C2) are subjected to address conversion to different addresses.

3. Method according to Claim 2, **characterized in that** in all but the last of the series-connected subscribers (X1, ... X3; Y1, ... Y3; Z1, ... Z3; C1) the address conversion is executed for the respective downstream subscribers (X2, ... X4; Y1, ... Y4; Z2, ... Z4, C2).

4. Method according to Claim 3, **characterized in that** all but the last of the series-connected subscribers (X1, ... X3; Y1, ... Y3; Z1, ... Z3; C1) store rules for the address conversion of the downstream subscriber (s) (X2, ... X4; Y1, ... Y4; Z2, ... Z4, C2) and **in that** all but the last of the series-connected subscribers (X1, ... X3; Y1, ... Y3; Z1, ... Z3; C1) check an incoming address for whether it is their own address and, if it is not their own address, convert the incoming address on the basis of the relevant address conversion rules and forward it to the downstream subscriber (s) (X2, ... X4; Y1, ... Y4; Z2, ... Z4; C2).

5. Method according to Claim 4, **characterized in that** the subscribers (X1, ... X3; Y1, ... Y3; Z1, ... Z3; C1) check the incoming address bit by bit, convert it where appropriate and forward it to the downstream subscriber(s) (X2, ... X4; Y2, ... Y4; Z2, ... Z4; C2).

6. Method according to Claim 5, **characterized in that** the subscribers (X1, ... X3; Y1, ... Y3; Z1, ... Z3; C1) forward the first incoming address bit which does not match the bit combination for the address of the subscriber (X1, ... X3; Y1, ... Y3; Z1, ... Z3; C1) to the downstream subscribers (X2, ... X4; Y2, ... Y4; Z2, ... Z4; C2), using a conversion rule, as the previously transmitted address bits or as all other address bits.

7. Method according to Claim 4, **characterized in that** the incoming address is buffer-stored and decoded in the subscribers (X1, ... X3; Y1, ... Y3; Z1, ... Z3; C1), and where appropriate at least one address bit is converted in targeted fashion and the converted address is forwarded to the downstream subscriber(s) (X2, ... X4; Y2, ... Y4; Z2, ... Z4; C2).

8. Method according to one of Claims 4 to 7, **characterized in that** the subscribers (X1, ... X3; Y1, ... Y3; Z1, ... Z3; C1) stop the communication from being forwarded to the downstream subscribers (X2, ... X4; Y2, ... Y4; Z2, ... Z4; C2), terminate said forwarding prematurely or modify it if it is being sent to their own address.

9. Method according to Claim 8, **characterized in that** the subscribers (X1, ... X3; Y1, ... Y3; Z1, ... Z3; C1) are adjusted by changeover commands for forwarding a single communication sequence and/or for permanently forwarding all the communication sequences up to the arrival of an event, a switch-off command or reinitialization of the subscriber (X1, ... X3; Y1, ... Y3; Z1, ... Z3; C1).

10. Method according to one of Claims 1 to 4, **characterized in that** during an initialization phase before the actual operation of the bus for the purpose of information transmission the originally same addresses of the series-connected subscribers (X1, ... X4; Y1, ... Y4; Z1, ... Z4; C1, C2) are reprogrammed to different addresses.

11. Method according to Claim 10, **characterized in that** a master subscriber (A) connected to the bus (1) prompts and coordinates the reprogramming of the addresses.

12. Method according to Claim 10, **characterized in that** a master subscriber (A) connected to the bus (1) prompts the reprogramming of the addresses, and at least some of the series-connected subscribers (X1, ... X4; Y1, ... Y4; Z1, ... Z4; C1, C2) coordinate the reprogramming of the addresses.

13. Method according to Claim 10, **characterized in that** at least some of the series-connected subscribers (X1, ... X4; Y1, ... Y4; Z1, ... Z4; C1, C2) prompt and coordinate the reprogramming of the addresses.

14. Method according to Claim 12 or 13, **characterized in that** at least some of the series-connected subscribers (X1, ... X4; Y1, ... Y4; Z1, ... Z4; C1, C2) store alternative addresses or instructions for forming the alternative addresses to which the subscriber (X2, ... X4; Y2, ... Y4; Z2, ... Z4; C2) is changed over for the purpose of reprogramming the address.

15. Method according to one of Claims 10 to 14, **characterized in that** the method is performed until all the subscribers (X1, ... X4; Y1, ... Y4; Z1, ... Z4; C1, C2) can be addressed using different addresses during operation of the bus (1) for the purpose of information transmission.

16. One of a plurality of subscribers (X1, ... X4; Y1, ... Y4; Z1, ... Z4; C1, C2) connected to a serial bus (1), wherein at least some of the subscribers (X1, ... X4; Y1, ... Y4; Z1, ... Z4; C1, C2) can be addressed using the same address and the bus (1) comprises at least one address line (3) for addressing the subscribers (X1, ... X4; Y1, ... Y4; Z1, ... Z4; C1, C2), **characterized in that** the subscriber (X1, ... X3; Y1, ... Y3; Z1, ... Z3; C1) has first means for connection to the address line (3) and second means for connection of one of those subscribers (X2, ... X4; Y2, ... Y4; Z2, ... Z4; C2) which can originally be addressed using the same address as itself, so that the subscribers (X1, ... X4; Y1, ... Y4; Z1, ... Z4; C1; C2) which can originally be addressed using the same address are connected in series to the address line (3) via the subscriber (X1, ... X3; Y1, ... Y3; Z1, ... Z3; C1), so that only one of the subscribers (X1, ... X4; Y1, ... Y4; Z1, ... Z4, C1, C2) which can originally be addressed using the same address is connected directly to the address line (3), and only the directly connected subscriber is addressed by a master subscriber (A) using the original address, and the subscriber (X1, ... X3; Y1, ... Y3; Z1, ... Z3; C1) has third means for altering the address on the basis of particular rules and transmitting the altered address for the downstream subscriber(s) (X2, ... X4; Y2, ... Y4; Z2, ... Z4; C2), so that it corresponds to the original address of one of the downstream subscribers (X2, ... X4; Y1, ... Y4; Z2, ... Z4; C2).

17. Subscriber according to Claim 16, **characterized in that** the subscriber (X1, ... X3; Y1, ... Y3; Z1, ... Z3; C1) has means for implementing a method according to one of Claims 2 to 12.

## Revendications

1. Procédé de gestion de plusieurs participants (X1, ..., X4; Y1, ..., Y4; Z1, ..., Z4, B, C1, C2, D, E) raccordés à un bus série (1), le bus (1) comportant au moins un conducteur d'adresses (3) qui permet d'adresser les participants (X1, ..., X4; Y1, ..., Y4; Z1, ..., Z4, B, C1, C2, D, E),
**caractérisé en ce**
**qu'**au moins certains participants (X1, ..., X4; Y1, ..., Y4; Z1, ..., Z4, C1, C2) qui sont adressés initialement à la même adresse initiale sont raccordés les uns à la suite des autres au conducteur d'adresses (3) de telle sorte que seul l'un des participants (X1, ..., X4; Y1, ..., Y4; Z1, ..., Z4, C1, C2) qui sont adressés initialement à la même adresse soit raccordé directement au conducteur d'adresses (3) et que seul le participant raccordé directement soit adressé par un participant-maître (A) par l'intermédiaire de l'adresse initiale, l'adresse du ou des participants (X2, ..., X4; Y1, ..., Y4; Z2, ..., Z4; C2) raccordés ensuite étant transmise par le ou les participants (X1, Y1, Z1; C1) raccordés précédemment, l'adresse du ou des participants (X1, Y1, Z1; C1) raccordés précédemment étant ainsi modifiée selon des règles définies de telle sorte qu'elle corresponde à l'adresse initiale de l'un des participants (X2, ..., X4; Y1, ..., Y4; Z2, ..., Z4; C2) raccordés ensuite.

2. Procédé selon la revendication 1, **caractérisé en ce que** pendant le fonctionnement proprement dit du bus (1), pour la transmission d'informations, les adresses des participants (X1, ..., X4; Y1, ..., Y4; Z1, ..., Z4; C1, C2) raccordés les uns à la suite des autres sont converties en des adresses différentes.

3. Procédé selon la revendication 2, **caractérisé en ce que** la conversion d'adresse est exécutée chez tous les participants (X1, ..., X3; Y1, ..., Y3; Z1, ..., Z3; C1) raccordés à la suite des autres, jusqu'au dernier, à chaque fois pour les participants (X2, ..., X4; Y1, ..., Y4; Z2, ..., Z4; C2) raccordés ensuite.

4. Procédé selon la revendication 3, **caractérisé en ce que** des règles de conversion d'adresse du ou des participants (X2, ..., X4; Y1, ..., Y4; Z2, ..., Z4; C2) raccordés ensuite sont conservées jusqu'au dernier des participants (X1, ..., X3; Y1, ..., Y3; Z1, ..., Z3; C1) raccordés successivement et **en ce que** tous les participants (X1, ..., X3; Y1, ..., Y3; Z1, ..., Z3; C1) raccordés à la suite des autres, jusqu'au dernier, vérifient si une adresse entrante est leur propre adresse et au cas où ce n'est pas leur propre adresse, convertissent l'adresse entrante selon les règles appropriées de conversion d'adresse et la transmettent au participant ou aux participants (X2, ..., X4; Y1, ..., Y4; Z2, ..., Z4; C2) raccordés ensuite.

5. Procédé selon la revendication 4, **caractérisé en ce que** les participants (X1, ..., X3; Y1, ..., Y3; Z1, ..., Z3; C1) vérifient bit par bit l'adresse entrante, la convertissent éventuellement et la transmettent au participant ou aux participants (X2, ..., X4; Y2, ..., Y4; Z2, ..., Z4; C2) raccordés ensuite.

6. Procédé selon la revendication 5, **caractérisé en ce que** les participants (X1, ..., X3; Y1, ..., Y3; Z1, ..., Z3; C1) transmettent le premier bit d'adresse entrant qui ne correspond pas à la combinaison de bits de l'adresse du participant (X1, ..., X3; Y1, ..., Y3; Z1, ..., Z3; C1) au participants (X2, ..., X4; Y2, ..., Y4; Z2, ..., Z4; C2) raccordés ensuite en utilisant une règle de conversion, comme les bits d'adresse transmis précédemment ou comme tous les autres bits d'adresse.

7. Procédé selon la revendication 4, **caractérisé en ce que** l'adresse entrante est conservée temporairement en mémoire et décodée chez les participants (X1, ..., X3; Y1, ..., Y3; Z1, ..., Z3; C1), au moins un bit d'adresse étant éventuellement converti de manière ciblée et l'adresse convertie étant transmise au participant ou aux participants (X2, ..., X4; Y2, ..., Y3; Z2, ..., Z4; C2) raccordés ensuite.

8. Procédé selon l'une des revendications 4 à 7, **caractérisé en ce que** les participants (X1, ..., X3; Y1, ..., Y3; Z1, ..., Z3; C1) empêchent le transfert de la communication aux participants (X2, ..., X4; Y2, ..., Y3; Z2, ..., Z4; C2) raccordés ensuite, l'interrompent prématurément ou la modifient si elle est destinée à leur propre adresse.

9. Procédé selon la revendication 8, **caractérisé en ce que** les participants (X1, ..., X3; Y1, ..., Y3; Z1, ..., Z3; C1) sont réglés par des ordres de commutation en vue du transfert d'une unique séquence de communication et/ou d'un transfert permanent de toutes les séquences de communication jusqu'à ce que survienne un événement, une commande de débranchement ou une réinitialisation du participant (X1, ..., X3; Y1, ..., Y3; Z1, ..., Z3; C1).

10. Procédé selon l'une des revendications 1 à 4, **caractérisé en ce que** pendant une phase d'initialisation qui précède le fonctionnement proprement dit du bus et en vue d'une transmission d'informations, une reprogrammation des propres adresses initiales des participants (X1, ..., X4; Y1, ..., Y4; Z1, ..., Z4; C1, C2) raccordés les uns à la suite des autres en des adresses différentes a lieu.

11. Procédé selon la revendication 10, **caractérisé en ce qu'**un participant-maître (A) raccordé au bus (1) lance et coordonne la reprogrammation des adresses.

12. Procédé selon la revendication 10, **caractérisé en ce qu'**un participant-maître (A) raccordé au bus (1) lance la reprogrammation des adresses et **en ce qu'**au moins certains des participants (X1, ..., X4; Y1, ..., Y4; Z1, ..., Z4; C1, C2) raccordés les uns à la suite des autres coordonnent la reprogrammation des adresses.

13. Procédé selon la revendication 10, **caractérisé en ce qu'**au moins certains des participants (X1, ..., X4; Y1, ..., Y4; Z1, ..., Z4; C1, C2) raccordés les uns à la suite des autres lancent et coordonnent la reprogrammation des adresses.

14. Procédé selon les revendications 12 ou 13, **caractérisé en ce que** des adresses alternatives ou des prescriptions de formation d'adresses alternatives sur lesquelles les participants (X2, ..., X4; Y2, ..., Y4; Z2, ..., Z4; C2) sont commutés pour la reprogrammation des adresses sont conservées en mémoire au moins chez certains des participants (X1, ..., X4; Y1, ..., Y4; Z1, ..., Z4; C1, C2) raccordés les uns à la suite des autres.

15. Procédé selon l'une des revendications 10 à 14, **caractérisé en ce que** le procédé est exécuté jusqu'à ce que tous les participants (X1, ..., X4; Y1, ..., Y4; Z1, ..., Z4; C1, C2) puissent être adressés à différentes adresses pendant le fonctionnement du bus (1) en vue de la transmission d'informations.

16. Un parmi plusieurs participants (X1, ..., X4; Y1, ..., Y4; Z1, ..., Z4; C1, C2) raccordés à un bus série (1), au moins certains des participants (X1, ..., X4; Y1, ..., Y4; Z1, ..., Z4; C1, C2) pouvant être adressés à la même adresse et le bus (1) comportant au moins un conducteur d'adresses (3) qui permet d'adresser les participants (X1, ..., X4; Y1, ..., Y4; Z1, ..., Z4; C1, C2),
**caractérisé en ce que**
le participant (X1, ..., X3; Y1, ..., Y3; Z1, ..., Z3; C1) présente des premiers moyens de raccordement au conducteur d'adresses (3) et des deuxièmes moyens de raccordement au participant (X2, ..., X4; Y2, ..., Y4; Z2, ..., Z4; C2) qui peut être adressé initialement à la même adresse que lui-même, de sorte que les participants (X1, ..., X4; Y1, ..., Y4; Z1, ..., Z4; C1, C2) qui peuvent être adressés initialement à la même adresse sont raccordés les uns à la suite des autres au conducteur d'adresses (3) par l'intermédiaire du participant (X1, ..., X3; Y1, ..., Y3; Z1, ..., Z3; C1), de sorte que seul l'un des participants (X1, ..., X4; Y1, ..., Y4; Z1, ..., Z4; C1, C2) qui peuvent être adressés initialement à la même adresse soit raccordé directement au conducteur d'adresses (3) et que seul le participant raccordé directement soit adressé par un participant-maître (A) par l'intermédiaire de l'adresse initiale, le participant (X1, ..., X3; Y1, ..., Y3; Z1, ..., Z3; C1) présentant des troisièmes moyens de modification de l'adresse selon des règles définies et de transmission de l'adresse modifiée au participant ou aux participants (X2, ..., X4; Y2, ..., Y4; Z2, ..., Z4; C2) raccordés ensuite, de sorte qu'elle corresponde à l'adresse initiale de l'un des participants (X2, ..., X4; Y1, ..., Y4; Z2, ..., Z4; C2) raccordés ensuite.

17. Participant selon la revendication 16, **caractérisé en ce que** le participant (X1, ..., X3; Y1, ..., Y3; Z1, ..., Z3; C1) présente des moyens de mise en oeuvre d'un procédé selon l'une des revendications 2 à 12.
